# EUROPÄISCHE PATENTSCHRIFT

(11) **EP 3 159 594 B1**
(45) Veröffentlichungstag und Bekanntmachung des Hinweises auf die Patenterteilung: **27.11.2019**
(21) Anmeldenummer: 16195313.8
(22) Anmeldetag: 24.10.2016
(51) Int. Cl.: F16B 23/00, F16L 33/22, F16B 37/14

(54) **MUTTER FÜR EINE SCHLAUCHVERSCHRAUBUNG**
NUT FOR A SCREW COUPLING FOR HOSES
ÉCROU POUR UN RACCORD DE TUYAU

(30) Priorität: 22.10.2015 DE 102015220690
(43) Veröffentlichungstag der Anmeldung: 26.04.2017
(73) Patentinhaber: MESTO Spritzenfabrik Ernst Stockburger GmbH, 71691 Freiberg am Neckar (DE)
(72) Erfinder: Rehkugler, Rolf, 71404 Korb (DE); Mogilewski, Juri, 70178 Stuttgart (DE)
(74) Vertreter: DREISS Patentanwälte PartG mbB

(56) Entgegenhaltungen:
- WO-A1-2010/053366
- FR-A1- 2 253 182
- US-A- 4 316 675
- US-A1- 2006 193 712

## Beschreibung

Die Erfindung betrifft eine Mutter für eine Schlauchverschraubung, wobei die Schlauchverschraubung einen Stutzen mit einem Außengewinde umfasst. Auf dieses Außengewinde wird eine (Überwurf-)Mutter geschraubt, die beim Anziehen der Mutter den Schlauch dichtend mit dem Stutzen verbindet, so dass nach erfolgtem Anziehen der Überwurfmutter die Schlauchverschraubung flüssigkeits- und/oder gasdicht ist. Ein Beispiel für eine solche Schlauchverschraubung ist aus der FR 2253182 A bekannt.

Aus der US 2006/0193712 A1 ist ein Befestigungselement für einen Wasserhahn bekannt, bei dem eine Mutter in einem zylindrischen Käfig verdrehsicher und axial verschiebbar aufgenommen ist.

Aus der WO 2010/053366 A1 ist ein Befestigungselement für einen Träger mit einer Tragplatte bekannt, das einen Rahmen mit einer Grundplatte und eine Tragplatte umfasst, wobei das Befestigungselement ist beweglich an dem Rahmen angeordnet.

Aus der US 4 316 675 ist eine Käfigmutter bekannt bei der die Mutter mittels eines Sicherungsblechs gegen Verdrehen gesichert ist.

Um das zum Anziehen und Abdichten erforderliche Drehmoment auf die Mutter ausüben zu können, ist es möglich, am Außendurchmesser der Mutter einen Sechskant auszubilden und dann mit Hilfe eines Gabelschlüssels die Schlauchverschraubung anzuziehen. Nachteilig an dieser Lösung ist, dass ein Werkzeug benötigt wird, das nicht immer zur Hand ist, wenn eine solche Schlauchverschraubung geöffnet oder nachgezogen werden soll. Daher ist es bekannt, Überwurfmuttern vorzusehen, die am Außendurchmesser so profiliert sind, dass sie Griffmulden bzw. radial nach außen vorspringende Wülste aufweisen, die es ermöglichen, die Mutter von Hand, d.h. ohne Werkzeug, anzuziehen.

Diese werkzeuglosen Überwurfmuttern sind an sich sehr vorteilhaft. Sie haben jedoch auch den Nachteil, dass sie einen gewissen Bauraum einnehmen, weil nur dann eine ausreichend große Grifffläche für die Finger einer Hand vorhanden ist und erst, wenn die Überwurfmutter einen gewissen Durchmesser aufweist, auch das zum Anziehen und Abdichten notwendige Drehmoment aufgebracht werden kann.

Der Erfindung liegt die Aufgabe zugrunde, eine werkzeuglos betätigbare (Überwurf-)Mutter für eine Schlauchverschraubung bereitzustellen, welche gegenüber herkömmlichen (Überwurf-) Muttern funktionale Vorteile bietet und gleichzeitig weniger Bauraum benötigt. Außerdem soll ein guter Schutz der Mutter gegen mechanische Beschädigungen erzielt werden.

Diese Aufgabe wird erfindungsgemäß bei einer Mutter für eine Schlauchverschraubung nach den Merkmalen des Anspruchs 1 gelöst.

Durch die zweiteilige Ausbildung der erfindungsgemäßen Mutter ist es möglich, den Drehgriff in zwei Positionen relativ zu der eigentlichen Mutter zu positionieren. Wenn der Drehgriff in der Betätigungsposition ist, dann ragt er in axialer Richtung über die Mutter hinaus. Damit ist eine gute Zugänglichkeit des Drehgriffs für die Finger einer Hand gewährleistet und es ist möglich, das erforderliche Drehmoment von der Hand in den Drehgriff einzuleiten.

Wenn die Schlauchverschraubung angezogen ist, wird der Drehgriff in axialer Richtung relativ zu der Mutter verschoben. Dadurch werden die Baulänge und das Volumen (=Bauraum) der Überwurfmutter nahezu halbiert. Außerdem ist es möglich, den Drehgriff in den Zeiten, in denen die Schlauchverschraubung nicht geöffnet oder geschlossen werden soll, in einer Vertiefung eines Gehäuses "verschwinden" zu lassen. Dadurch ergeben sich ein Schutz der Überwurfmutter und damit auch der Schlauchverschraubung gegen mechanische Beschädigungen und eine sehr glatte und mit wenigen Vorsprüngen versehene Kontur des Gehäuses bzw. der Schlauchverschraubung.

Dadurch, dass die Axialnuten in den Wülsten ausgebildet sind, dann ergibt sich eine sehr platzsparende und trotzdem belastbare Bauweise.

In weiterer vorteilhafter Ausgestaltung der Erfindung wird die Drehmomentübertragung zwischen dem Drehgriff und der Mutter dadurch erreicht, dass der Drehgriff mehrere Axialnuten aufweist und dass die Mutter dementsprechend mehrere mit den Axialnuten formschlüssig zusammenwirkende Vorsprünge aufweist.

Im Sinne einer gleichmäßigeren Beanspruchung der Mutter und des Drehgriffs hat es sich als vorteilhaft erwiesen, wenn die Mutter drei oder vier über den Umfang verteilte Vorsprünge aufweist und der Drehgriff ebenfalls in entsprechender Weise drei oder vier über den Umfang verteilte Axialnuten aufweist.

Damit der Drehgriff gegen Verlieren gesichert ist, ist weiter vorgesehen, dass der Drehgriff Anschlagmittel aufweist, die bevorzugt zusammen mit dem oder den Vorsprüngen der Mutter die axiale Verschiebung des Drehgriffs relativ zu der Mutter in einer Richtung begrenzen.

Selbstverständlich ist hier eine kinematische Umkehr möglich, so dass die Anschlagmittel an der Mutter ausgebildet sind und diese Anschlagmittel zusammen mit den Vorsprüngen des Drehgriffs die axiale Verschiebung des Drehgriffs begrenzen.

Erfindungsgemäß sind außen am Drehgriff (Griff-)Wülste in gleicher Zahl vorgesehen, an denen die Finger einer Hand gut angreifen und das Drehmoment von der Hand auf die Mutter übertragen können.

Um ein Kippen des Drehgriffs relativ zu der Mutter zu verhindern, sind an der Mutter und dem Drehgriff mindestens je ein prismatischer, insbesondere zylindrischer, Führungsabschnitt ausgebildet.

Um das Einrasten des Drehgriffs in beiden Positionen (Anziehen bzw. Lösen der Mutter und eingeschobener Zustand der Mutter) zu sichern, ist an dem Führungsabschnitt der Mutter mindestens eine, bevorzugt jedoch zwei, Rastnasen vorhanden.

Die Drehmomentübertragung zwischen den Axialnuten und den Vorsprüngen ist dann optimal, wenn eine Kontaktfläche zwischen den Axialnuten und den Vorsprüngen in etwa radial verläuft. Dann ist der sogenannte Antriebswinkel gleich Null, was vorteilhaft ist.

Weitere Vorteile und vorteilhafte Ausgestaltungen der Erfindung sind der nachfolgenden Zeichnung, deren Beschreibung und den Patentansprüchen entnehmbar.

### Zeichnung

Es zeigen:
- Figur 1: eine isometrische Darstellung der erfindungsgemäßen zweiteiligen Überwurfmutter von unten,
- Figur 2: eine isometrische Darstellung der erfindungsgemäßen Mutter von oben,
- Figur 3: eine Seitenansicht der erfindungsgemäßen Mutter mit ausgezogenem Drehgriff,
- Figur 4: eine Ansicht von unten auf die erfindungsgemäße Mutter,
- Figur 5: einen Schnitt durch die erfindungsgemäße Mutter in ausgezogenem Zustand,
- Figur 6: einen Schnitt durch eine erfindungsgemäße Mutter in eingefahrenem Zustand,
- Figur 7: eine Einbausituation einer Schlauchverschraubung mit erfindungsgemäßer Mutter in einer ausgezogenen Position und
- Figur 8: eine Einbausituation einer Schlauchverschraubung mit erfindungsgemäßer Mutter, wobei die Mutter in einer Vertiefung des Gehäuses angeordnet ist,
- Figur 9: ein Teil-Schnitt durch eine Einbausituation gemäß Figur 7 und
- Figur 10: ein Teil-Schnitt durch eine Einbausituation gemäß Figur 8.

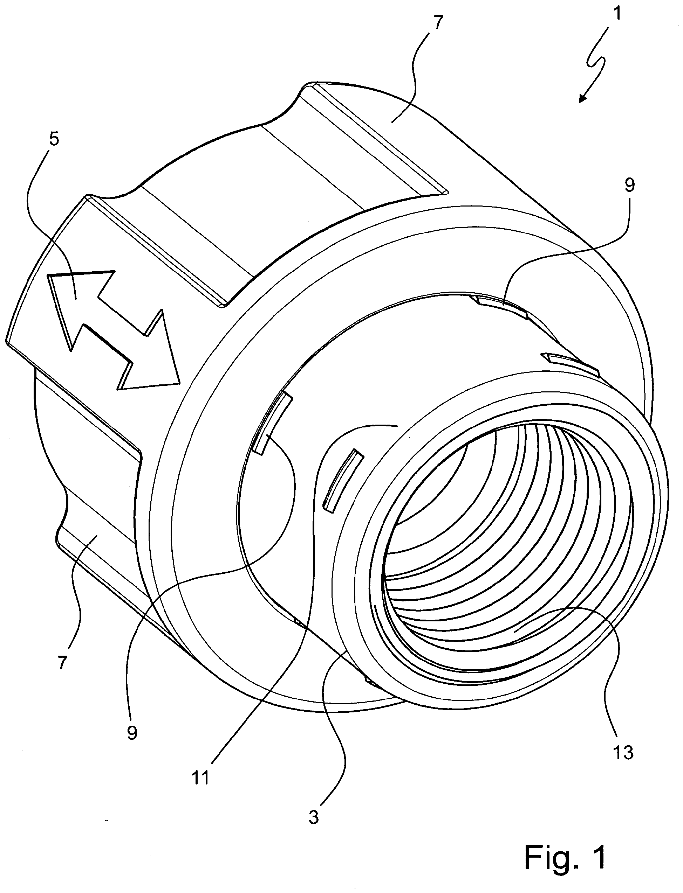

In der Figur 1 ist eine erfindungsgemäße zweiteilige Mutter, umfassend die eigentliche Mutter 3 und einen mit ihr verbundenen Drehgriff 1 in ausgezogenem Zustand. Als "ausgezogener Zustand" wird der Zustand der Mutter bezeichnet, bei der der Drehgriff 1 über das axial hintere Ende der Mutter 3 hinausragt. Dann hat die Mutter ihre maximale Länge. Die mögliche Axialbewegung des Drehgriffs 1 relativ zu der Mutter 3 ist durch einen Doppelpfeil 5, der in einem Wulst 7 des Drehgriffs 1 eingearbeitet ist, angedeutet.

Im vorliegenden Ausführungsbeispiel hat der Drehgriff 1 vier über den Umfang gleichmäßig verteilte Wülste 7, von denen nur drei sichtbar sind. Der Drehgriff 1 wird in der in Figur 1 dargestellten Position

("ausgezogener Zustand") gehalten durch Rastnasen 9, die an einem prismatischen Führungsabschnitt 11 ausgebildet sind. Gut zu erkennen ist in der Figur 1 auch, dass die Mutter 3 einen Innengewinde 13 aufweist.

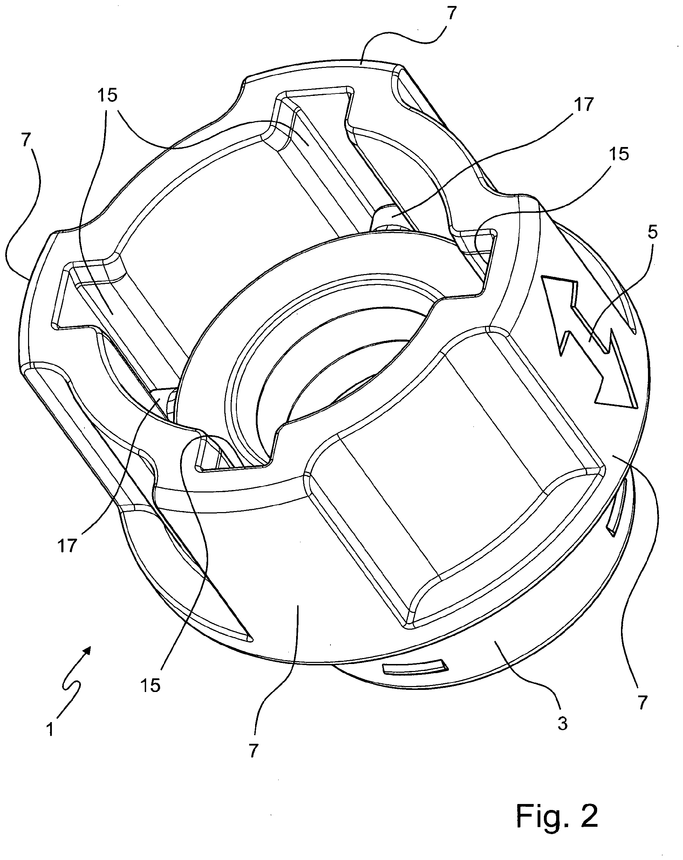

In der Figur 2 ist die erfindungsgemäße Mutter 3 ebenfalls in "ausgezogenem" Zustand von der anderen Seite dargestellt. Dabei ist gut zu erkennen, dass der Drehgriff 1 in axialer Richtung über das in Figur 2 obere Ende der Mutter 3 hinausragt. Außerdem ist zu erkennen, dass innerhalb der Wülste 7 Axialnuten 15 ausgebildet sind, in denen jeweils ein Vorsprung 17 der Mutter 3 geführt ist. Diese "Linearführung" ermöglicht einerseits, dass der Drehgriff 1 in axialer Richtung relativ zu der Mutter 3 verschiebbar ist und andererseits die Übertragung eines Drehmoments vom Drehgriff 1 auf die Mutter 3.

Weil der Drehgriff 1 ergonomisch günstig geformt ist, können damit ausreichend hohe Anzugsmomente auf die Mutter 3 ausgeübt werden, so dass die Schlauchverschraubung mit einem Gewindestutzen (nicht dargestellt) werkzeuglos und ausreichend fest erfolgen kann.

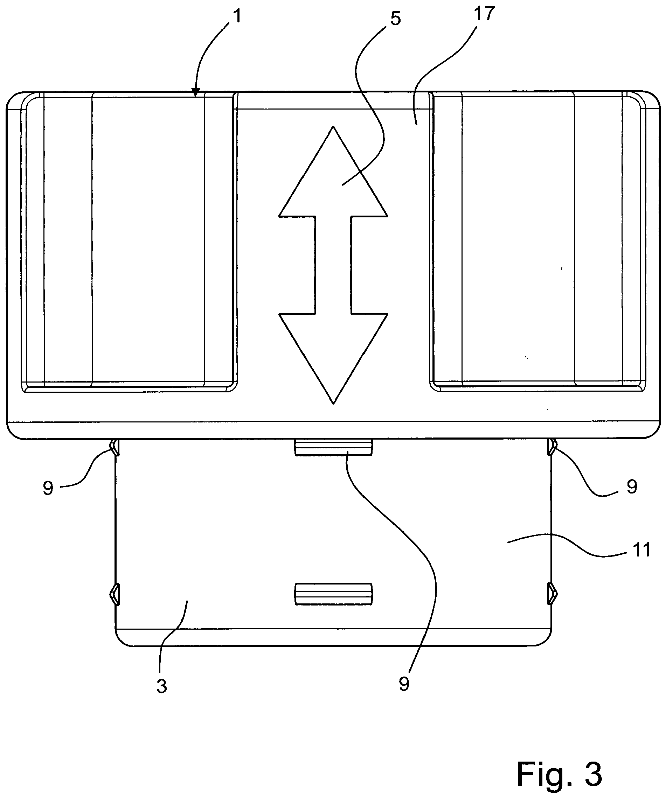

In der Figur 3 ist die erfindungsgemäße zweiteilige Mutter in einer Seitenansicht dargestellt. Aus Gründen der Übersichtlichkeit sind nur die zwei Hauptkomponenten, nämlich die Mutter 3 und der Drehgriff 1, mit Bezugszeichen versehen.

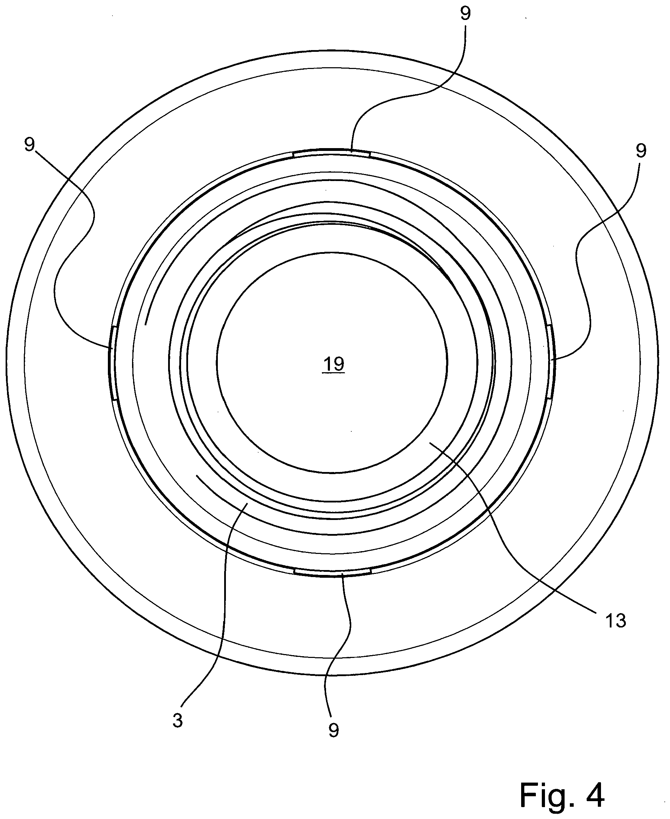

In der Figur 4 ist die Mutter in einer Ansicht von unten dargestellt. In dieser Darstellung sind die Rastnasen 9 sehr gut zu erkennen. Es ist auch gut zu erkennen, dass die Mutter 3 eine Durchgangsöffnung 19 aufweist. Durch diese Durchgangsöffnung wird ein Schlauch (nicht dargestellt) geführt und mit Hilfe der erfindungsgemäßen Mutter dichtend mit einem Gewindestutzen (nicht dargestellt) verbunden.

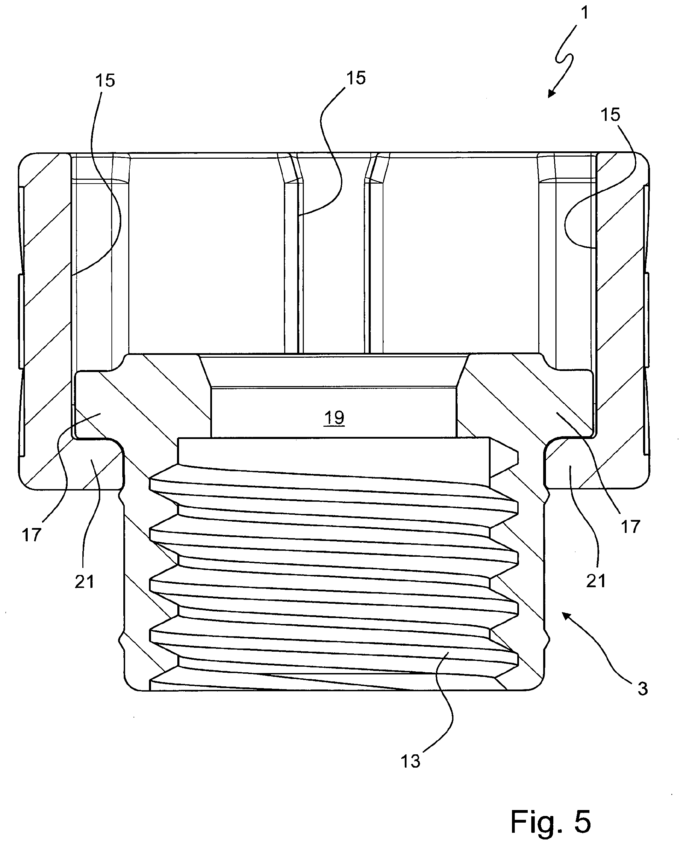

In der Figur 5 ist die erfindungsgemäße Mutter in einem Längsschnitt in ausgezogenem Zustand dargestellt. Aus dieser Darstellung wird deutlich, dass an dem in Figur 5 unteren Ende des Drehgriffs 1 Anschlagmittel 21, die hier als umlaufender Bund ausgebildet sind, vorgesehen sind. Die Anschlagmittel 21 verhindern, dass der Drehgriff 1 in Figur 5 nach oben aus der Mutter 3 herausgezogen wird bzw. herausfallen kann. Die Anschlagmittel 21 begrenzen die Axialnuten 15 und damit auch die axiale Verschiebung des Drehgriffs 1 relativ zur Mutter 3. Die Erfindung umfasst auch andere Anschlagmittel 21.

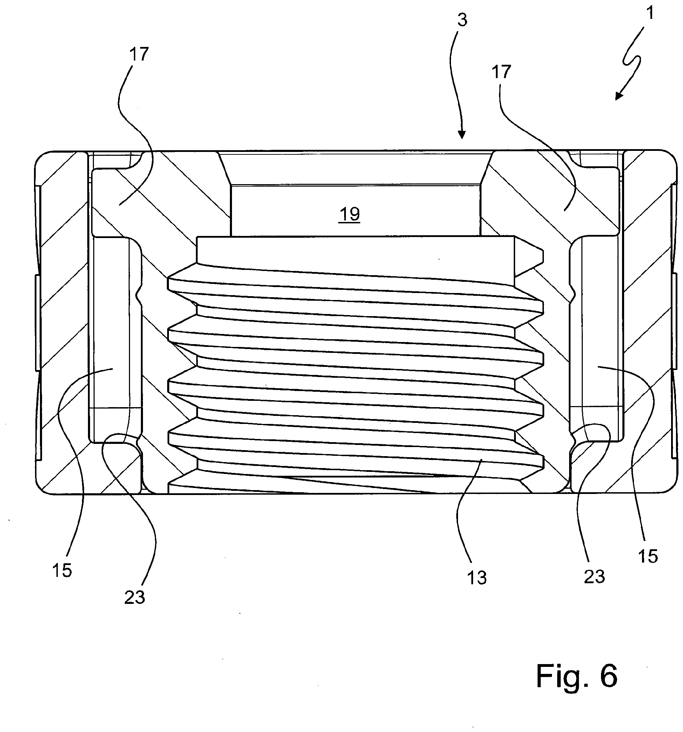

In der Figur 6 ist die erfindungsgemäße zweiteilige Mutter in zusammengeschobenem Zustand ebenfalls geschnitten dargestellt.

Man sieht deutlich, dass die axiale Länge des Drehgriffs 1 und der Mutter 3 etwa gleich sind und in zusammengeschobenem Zustand die Länge der zweiteiligen Mutter nur etwas mehr als die Hälfte der Gesamtlänge der in Figur 5 dargestellten Mutter in ausgezogenem Zustand beträgt.

In der Figur 6 wird deutlich, dass eine zweite Gruppe von Nasen 23 die axiale Position des Drehgriffs 1 relativ zu der Mutter 3 in zusammengeschobenem Zustand fixiert.

Die Montage der erfindungsgemäßen zweiteiligen Mutter erfolgt ganz einfach, indem der Drehgriff 1 von unten auf die Mutter 3 geschoben wird. Dabei bezieht sich die Ortsangabe "von unten" auf die in Figur 5 und 6 dargestellte Anordnung.

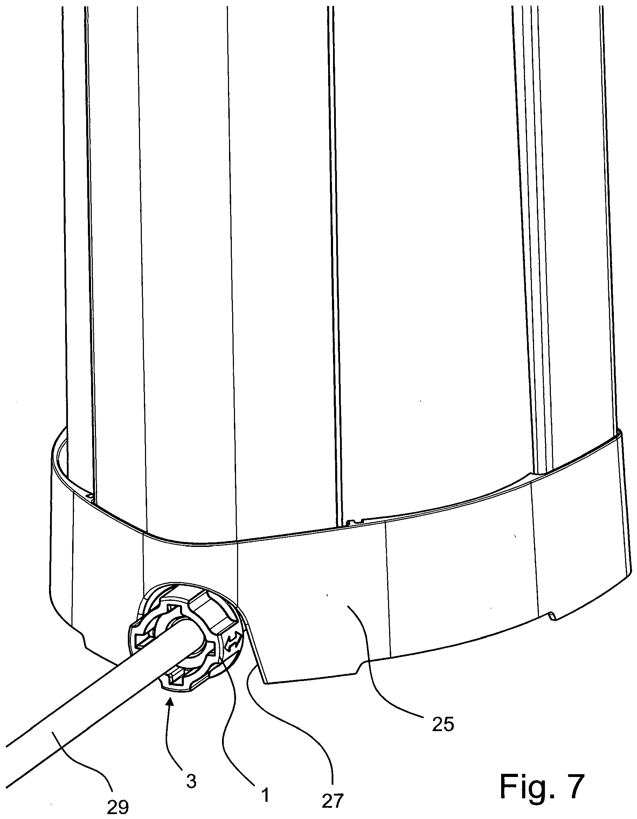

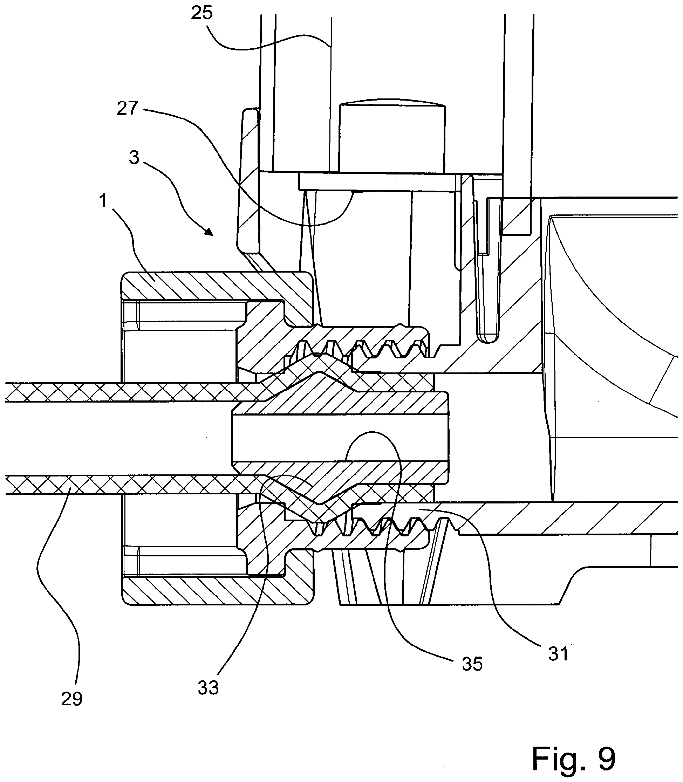

In der Figur 7 ist eine Isometrie dargestellt, bei der ein Gehäuse 25 eine Vertiefung 27 aufweist. In dieser Vertiefung 27 ist ein nicht sichtbarer Gewindestutzen vorhanden. Auf diesem Gewindestutzen wird ein Schlauch 29 mit Hilfe der erfindungsgemäßen Mutter 3 geschraubt, so wie in Figur 7 dargestellt. Die Mutter 3 wird mit Hilfe des ausgezogenen Drehgriffs 1 von Hand betätigt. Wenn der Drehgriff 1 ausgezogen ist, dann ragt er aus der Vertiefung 27 des Gehäuses heraus und lässt sich daher gut greifen (siehe Figur 9).

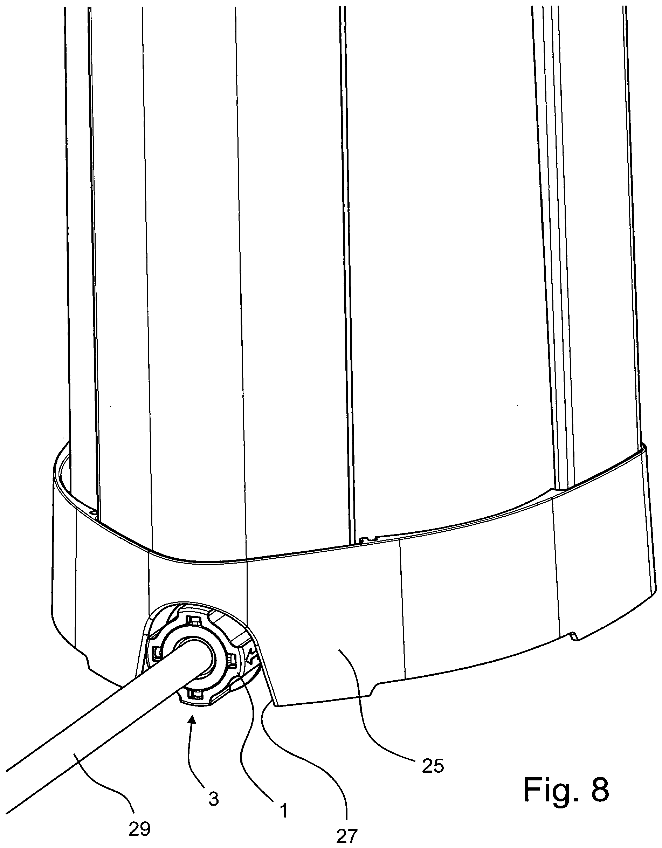

Wenn der Schlauch 29 dichtend mit dem Gehäuse 25 bzw. dem Gewindestutzen verschraubt wurde, wird der Drehgriff 1 in die Vertiefung 27 gedrückt und fixiert und dadurch vor ungewollter Betätigung und Beschädigungen geschützt. Die Vertiefung 29 dient gewissermaßen als Schutz für die erfindungsgemäße Mutter, wenn diese eingeschoben ist. Diese Situation ist in Figur 8 dargestellt.

In der Figur 9 ist ein Teil-Schnitt durch ein Gehäuse 25, die Vertiefung 27 und die Mutter 3 samt Drehgriff 1 dargestellt. Der Gewindestutzen hat das Bezugszeichen 31. Der Gewindestutzen 31 umfasst eine Muffe 33 mit einer zentralen Durchgangsbohrung 35. Auf die Muffe 33 wird der Schlauch 29 aufgeschoben und anschließend durch Aufschrauben der Mutter 3 dichtend mit ihr verbunden.

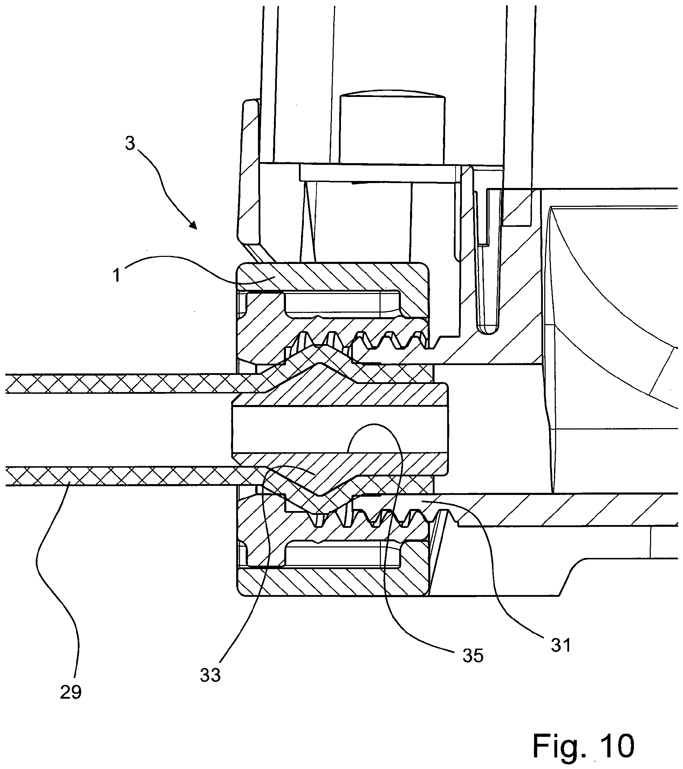

Aus der Figur 10 wird deutlich, dass bei eingeschobenem Drehgriff 1 dieser in der Vertiefung 27 des Gehäuses 25 "verschwindet" und dadurch vor Verschmutzung und Beschädigung geschützt ist.

## Patentansprüche

1. Mutter für eine Schlauchverschraubung, wobei die Mutter (3) eine zentrale Durchgangsöffnung (19), ein Innengewinde (13) und einen Drehgriff (1) aufweist, wobei der Drehgriff (1) drehfest und axial verschiebbar mit der Mutter (3) verbunden ist, wobei der Drehgriff (1) mehrere Axialnuten (15) aufweist, und wobei die Mutter (3) dementsprechend mehrere mit den Axialnuten (15) formschlüssig zusammenwirkende Vorsprünge (17) aufweist, **dadurch gekennzeichnet, dass** der Drehgriff (1) an einem Außendurchmesser mehrere über den Umfang verteilte Wülste (7) aufweist, dass sich die Wülste (7) in axialer Richtung erstrecken und dass die Axialnuten (15) in den Wülsten (7) angeordnet sind.

2. Mutter nach Anspruch 1, **dadurch gekennzeichnet, dass** die Mutter (3) drei oder vier über den Umfang verteilte Vorsprünge (17) aufweist, und dass der Drehgriff (1) drei oder vier über den Umfang verteilte Axialnuten (15) aufweist.

3. Mutter nach einem der Ansprüche 1 oder 2 **dadurch gekennzeichnet, dass** der Drehgriff (3) Anschlagmittel (21) aufweist, und dass die Anschlagmittel (21) zusammen mit dem oder den Vorsprüngen (17) der Mutter (3) die axiale Verschiebung des Drehgriffs (1) relativ zu der Mutter (3) in einer Richtung begrenzen.

4. Mutter nach einem der vorhergehenden Ansprüche, **dadurch gekennzeichnet, dass** die Mutter (3) und der Drehgriff (1) jeweils mindestens einen prismatischen Führungsabschnitt (11) aufweisen.

5. Mutter nach Anspruch 4, **dadurch gekennzeichnet, dass** an dem prismatischen Führungsabschnitt (11) der Mutter (3) mindestens eine Rastnase (9, 23) vorhanden ist.

6. Mutter nach einem der vorhergehenden Ansprüche, **dadurch gekennzeichnet, dass** die Kontaktflächen zwischen den Axialnuten (15) und den Vorsprüngen (17) radial verlaufen.

## Claims

1. Nut for a hose fitting, said nut (3) comprising a central through opening (19), an internal thread (13) and a turning grip (1), the turning grip (1) being connected to the nut (3) in a rotatably fixed and axially slidable manner, the turning grip (1) comprising multiple axial grooves (15) and the nut (3) correspondingly comprising multiple protrusions (17) cooperating with the axial grooves (15) in a positive fit, **characterized in that** the turning grip (1) has multiple bulges (7) at an outer diameter which are distributed over the circumference, that the bulges (7) extend in axial direction and that the axial grooves (15) are arranged in the bulges (7).

2. Nut as claimed in claim 1, **characterized in that** the nut (3) has three or four protrusions (17) distributed over the circumference and that the turning grip (1) has three or four axial grooves (15) distributed over the circumference.

3. Nut as claimed in one of claims 1 or 2, **characterized in that** the turning grip (3) comprises stop means (21) and that the stop means (21) together with the protrusion(s) (17) limit the axial movement of the turning grip (3) relative to the nut (3) in one direction.

4. Nut as claimed in one of the preceding claims, **characterized in that** the nut (3) and the turning grip (1) each comprise at least one prismatic guide section (11).

5. Nut as claimed in claim 4, **characterized in that** at least one catch (9, 23) is present on the prismatic guide section (11) of the nut (3).

6. Nut as claimed in one of the preceding claims, **characterized in that** the contact surfaces between the axial grooves (15) and the protrusions (17) extend radially.

## Revendications

1. Ecrou pour un raccord fileté de tuyau, l'écrou (3) présentant un orifice traversant central (19), un taraudage (13) et une poignée rotative (1), la poignée rotative (1) étant reliée à l'écrou (3) de manière fixe en rotation et mobile axialement, la poignée rotative (1) présentant plusieurs rainures axiales (15) et l'écrou (3) présentant en conséquence plusieurs saillies (17) qui coopèrent par conformité de forme avec les rainures axiales (15, **caractérisé en ce que** la poignée rotative (1) présente, sur un diamètre extérieur, plusieurs bourrelets (7) répartis sur la circonférence, **en ce que** les bourrelets (7) s'étendent dans le sens axial et **en ce que** les rainures axiales (15) sont disposées dans les bourrelets (7).

2. Ecrou selon la revendication 1, **caractérisé en ce que** l'écrou (3) présente trois ou quatre saillies (17) réparties sur la circonférence, et **en ce que** la poignée rotative (1) présente trois ou quatre rainures axiales (1) réparties sur la circonférence.

3. Ecrou selon l'une quelconque des revendications 1 ou 2, **caractérisé en ce que** la poignée rotative (3) présente des moyens de butée (21), et **en ce que** les moyens de butée (21) délimitent, avec la ou les saillies (17) de l'écrou (3) le déplacement axial dans un sens de la poignée rotative (1) par rapport à l'écrou (3).

4. Ecrou selon l'une quelconque des revendications précédentes, **caractérisé en ce que** l'écrou (3) et la poignée rotative (1) présentent respectivement au moins un tronçon de guidage prismatique (11).

5. Ecrou selon la revendication 4, **caractérisé en ce qu'**au moins un bec d'encliquetage (9, 23) se trouve sur le tronçon de guidage prismatique (11) de l'écrou (3).

6. Ecrou selon l'une quelconque des revendications précédentes, **caractérisé en ce que** les faces de contact entre les rainures axiales (15) et les saillies (17) sont radiales.
